# EUROPÄISCHE PATENTSCHRIFT

(11) **EP 0 898 527 B1**
(45) Veröffentlichungstag und Bekanntmachung des Hinweises auf die Patenterteilung: **18.07.2001**
(21) Anmeldenummer: 97924960.4
(22) Anmeldetag: 20.05.1997
(51) Int. Cl.: B60R 22/46

(54) **GURTSTRAFFER FÜR EIN SICHERHEITSGURTSYSTEM**
BELT TIGHTENER FOR A SAFETY BELT SYSTEM
PRETENSIONNEUR DE CEINTURE POUR SYSTEME DE CEINTURE DE SECURITE

(30) Priorität: 20.05.1996 DE 29609054 U
(43) Veröffentlichungstag der Anmeldung: 03.03.1999
(73) Patentinhaber: TRW Occupant Restraint Systems GmbH & Co. KG, 73551 Alfdorf (DE)
(72) Erfinder: WIER, Franz, D-73571 Göggingen (DE)
(74) Vertreter: Kitzhofer, Thomas, Dipl.-Ing.
(86) Internationale Anmeldenummer: EP9702563
(87) Internationale Veröffentlichungsnummer: WO9744217

(56) Entgegenhaltungen:
- EP-A- 0 635 404
- FR-A- 2 494 997

## Beschreibung

Die Erfindung betrifft einen Gurtstraffer, insbesondere einen Schloßstraffer für ein Fahrzeuginsassen-Rückhaltesystem, mit einem Gehäuse mit einer zylindrischen Gehäusewand, einem Gasgenerator, einem durch die Gehäusewand radial begrenzten Arbeitsraum, in den das im Rückhaltefall freigesetzte Druckgas strömt, einem durch das Druckgas verschiebbaren Kolbenteil im Arbeitsraum, einem Gurtangriffsmittel, das mit dem angelegten Gurt in kraftübertragender Beziehung steht, und mit einem Zugübertragungsmittel, das das Gurtangriffsmittel mit dem Kolbenteil verbindet, wobei im Arbeitsraum eine gehäusefeste Umlenkeinrichtung für den Druckgasstrom vorgesehen ist.

Im Rückhaltefall strömt vom Gasgenerator freiwerdendes, heißes Druckgas in den Arbeitsraum, um das Kolbenteil zu verschieben. Das Zugübertragungsmittel, normalerweise ein Zugseil wird dabei durch unmittelbaren Kontakt mit dem heißen Druckgas hohen Temperaturen ausgesetzt und kann dadurch beschädigt werden. Bei Schloßstraffern kommt zur Temperaturbelastung auch noch eine hohe Zugbelastung des Zugübertragungsmittels hinzu, die durch den sich nach vorn verlagernden Fahrzeuginsassen ausgeübt wird. Das Zugübertragungsmittel wird bislang überdimensioniert, um den Belastungen standhalten zu können, was jedoch die Herstellungskosten des Gurtstraffers sowie sein Gewicht negativ beeinflußt.

Einen gattungsgemäßen Gurtstraffer zeigt die EP-A-0 635 404. Dieser Lineargurtstraffer hat einen Zylinder mit einem axialen Ende, an das sich ein L-förmiges Rohr anschließt. In einen Abschnitt des Rohres wird der Zylinder gesteckt und in den anderen ein Gasgenerator in Form einer Patrone. Das erzeugte Druckgas wird im gekrümmten Bereich des L-förmigen Rohres umgelenkt und aufgrund eines konisch zulaufenden hülsenförmigen, das Zugseil umgebenden Abschnittes sowie aufgrund der Geometrie der Innenseite des Rohres radial schräg nach innen und in Richtung auf das Zugseil gelenkt. Dies dient offensichtlich der optimalen Ausnützung des Druckgases, das ohne auf die Gehäusewand gerichtet zu werden, unmittelbar auf den Kolben treffen soll. Durch diese Gasführung ergibt sich aber eine hohe Temperaturbelastung des Zugseiles verbunden mit den oben geschilderten Nachteilen.

Die Erfindung schafft einen Gurtstraffer, bei dem das Zugübertragungsmittel geringeren thermischen Belastungen unterworfen ist als bei bislang bekannten. Dies wird bei einem Gurtstraffer der eingangs genannten Art dadurch erreicht, daß die Umlenkeinrichtung im Rückhaltefall eine Wand aufweist, die in Richtung zum Arbeitsraum radial schräg nach außen gerichtet ist und die den Druckgasstrom radial schräg nach außen vom Zugübertragungsmittel weg- und zur Gehäusewand lenkt und so ein direktes Anströmen des Zugübertragungsmittels durch aus dem Gasgenerator ausströmendes Gas verhindert. Im Gegensatz zu bislang bekannten Gurtstraffern wird beim erfindungsgemäßen Gurtstraffer ein unmittelbares Anströmen des Zugübertragungsmittels durch das heiße Druckgas vermieden. Die Umlenkeinrichtung richtet das Druckgas zur Gehäusewand. Von dieser kann dann das an der Gehäusewand deutlich abgekühlte Druckgas ohne weiteres auf das Zugübertragungsmittel treffen, ohne dieses thermisch zu stark zu belasten. Bei bislang bekannten Gurtstraffern hingegen ist es üblich, daß der Druckgasstrom unmittelbar auf das Zugübertragungsmittel und den Kolben, keinesfalls jedoch radial nach außen auf die Gehäusewand gerichtet ist, so daß die Kombination aus zwar kurzzeitiger, jedoch hoher Temperatur in Verbindung mit einer hohen Strömungsgeschwindigkeit zu den vorbeschriebenen Schäden am Zugübertragungsmittel führen kann. Da die Zeit, in der das heiße Druckgas in den Arbeitsraum strömt, sehr kurz ist, reicht es aus, das Zugübertragungsmittel vor direktem Anströmen zu hindern.

Es ist möglich, die Umlenkeinrichtung als separates Teil auszubilden, das beim Straffvorgang nicht mit dem Zugübertragungsmittel verschoben wird. Die Umlenkeinrichtung kann gemäß einer bevorzugten Ausführungsform ein Abschnitt des Gasgeneratorgehäuses sein. Das Gasgeneratorgehäuse ist üblicherweise geschlossen und wird erst mit Zündung des Treibsatzes geöffnet. Durch den bei der Aktivierung entstehenden Druck wird das Gasgeneratorgehäuse im Bereich des die Umlenkeinrichtung bildenden Abschnittes aufgebogen, ähnlich einer Klappe, und der in den Arbeitsraum ragende Abschnitt dient als Umlenkeinrichtung, der sich um das Zugübertragungsmittel legt.

Vorzugsweise ist das Gasgeneratorgehäuse kreisringförmig und im Inneren des Gehäuses des Gurtstraffers angeordnet. Der Abschnitt wird durch die an den Arbeitsraum angrenzende Stirnwand gebildet. Diese kann Sollbruchlinien aufweisen, die sich klappenartig bei Aktivierung des Gurtstraffers öffnende Abschnitte definieren. Da die Stirnwand üblicherweise radial nach innen aufklappt, hat sie in radial innenliegenden Bereichen eine größere Wandungsdicke als in radial äußeren Bereichen, die weiter vom Zugübertragungsmittel entfernt liegen.

Die Umlenkeinrichtung kann auch durch einen vom Gasgeneratorgehäuse abstehenden, in den Arbeitsraum ragenden, sich trichterförmig erweiternden Fortsatz gebildet sein, wobei der Fortsatz zusätzlich zu den vorbeschriebenen Ausführungsformen der Umlenkeinrichtung vorgesehen sein oder alleine die Umlenkeinrichtung bilden kann.

Als zusätzlicher Schutz des als Zugseil ausgebildeten Zugübertragungsmittels kann eine Ummantelung vorgesehen sein, die zudem in die Führung hineinragt und an ihr anliegt. Durch die Ummantelung kann eine erhöhte Dichtwirkung erreicht werden, denn im Gegensatz zur nicht kreiszylindrischen Außenfläche eines Zugseils kann die Ummantelung beliebig geformt sein.

Die Ummantelung ist vorzugsweise aus einem durch die heiße Gasströmung nicht zerstörbaren Material hergestellt und als Schrumpfschlauch, als Zugseilbeschichtung oder als mit dem Kolbenteil verbundene Hülse ausgebildet.

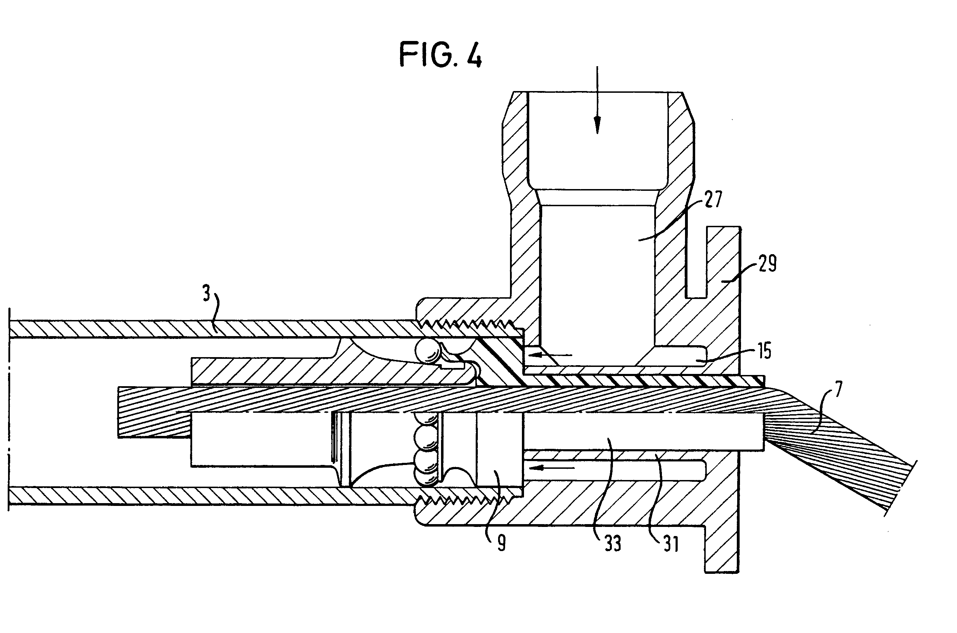

Weitere Merkmale und Vorteile der Erfindung ergeben sich aus der nachfolgenden Beschreibung und aus den nachfolgenden Zeichnungen, auf die Bezug genommen wird. Die Ausführungsformen nach den Figuren 4 bis 8 fallen nicht unter den Hauptanspruch, sie sind aus Anschauungsgründen aufgeführt. In den Zeichnungen zeigen:
Figur 1 eine Längsschnittansicht durch den oberen Teil eines Schloßstraffers gemäß einer ersten Ausführungsform,
Figur 2 eine Längsschnittansicht durch den oberen Teil eines Schloßstraffers gemäß einer zweiten Ausführungsform,
Figur 3 eine Längsschnittansicht durch den oberen Teil eines Schloßstraffers gemäß einer dritten Ausführungsform,
Figur 4 eine Längsschnittansicht durch den oberen Teil eines Schloßstraffers, bei dem im Gegensatz zu den erfindungsgemäßen, Ausführungsformen nach den Figuren 1 bis 3 der Gasgenerator außerhalb des Arbeitsraums angeordnet ist,
Figur 5 eine Längsschnittansicht durch den oberen Teil eines Schloßstraffers, der im Vergleich zu dem in Figur 4 gezeigten geringfügig modifiziert ist,
Figur 6 eine Längsschnittansicht durch den oberen Teil eines Schloßstraffers, der gegenüber den in den Figuren 4 und 5 gezeigten Ausführungsformen geringfügig modifiziert ist,
Figur 7 eine Längsschnittansicht durch den oberen Teil eines weiteren Schloßstraffers, und
Figur 8 eine Querschnittsansicht des Schloßstraffers nach der Linie VIII - VIII in Figur 7.

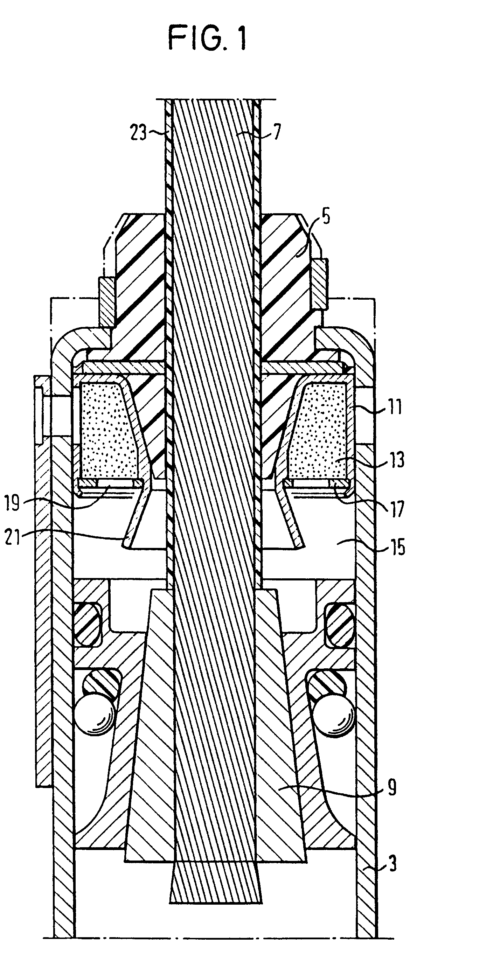

In Figur 1 ist ein Gurtstraffer, genauer gesagt ein Schloßstraffer für ein Sicherheitsgurtsystem gezeigt. Der Gurtstraffer hat ein mehrteiliges Gehäuse mit einem Rohr 3 und einer mit dem Rohr 3 verbundenen, stirnseitigen Führungsbuchse 5, durch deren zentrische Öffnung hindurch sich ein Zugübertragungsmittel 7 in Form eines Zugseils bis zu einem Kolbenteil 9 erstreckt, an dem es befestigt ist. Das Zugübertragungsmittel 7 verbindet das im Inneren des Rohres 3 verschiebbar angeordnete Kolbenteil 9 mit einem Gurtangriffsmittel (nicht gezeigt), das in kraftübertragender Beziehung mit dem angelegten Gurt steht. Das Gurtangriffsmittel ist bei der Ausbildung des Gurtstraffers als Schloßstraffer das Gurtschloß, in dem eine Steckzunge arretiert wird. Im Inneren des Gehäuses 3, 5 ist ein kreisringförmiger Gasgenerator angeordnet, der ein Gasgeneratorgehäuse 11 aufweist, in welchem ein pyrotechnischer Treibsatz 13 angeordnet ist. Der Treibsatz 13 wird im Rückhaltefall gezündet, um Druckgas zu erzeugen, welches in einen Arbeitsraum 15 im Gurtstraffer strömt. Die an den Arbeitsraum 15 angrenzende Stirnwand 17 des Gasgeneratorgehäuses 11 ist als separates Teil ausgebildet, das am übrigen Gasgeneratorgehäuse 11 durch Umbiegen eines radial inneren und eines radial äußeren Randes arretiert ist. Die Stirnwand 17 weist mehrere Gasaustrittsöffnungen 19 auf, die durch eine zerstörbare Membrane verschlossen sein können. Das Gasgeneratorgehäuse 11 hat ferner einen von seinem radial inneren Mantelabschnitt aus sich in den Arbeitsraum 15 erstreckenden Fortsatz 21, der eine Umlenkeinrichtung für den im Rückhaltefall in den Arbeitsraum 15 eindringenden Druckgasstrom bildet. Der Fortsatz 21 umgibt das Zugübertragungsmittel 7 und erweitert sich zu seinem freien Ende hin trichterförmig.

Das Zugübertragungsmittel 7 ist vom Kolbenteil 9 ab bis außerhalb des Gurtstraffers mit einer Ummantelung 23 umgeben, die eine glatte Außenoberfläche aufweist und an der Öffnung in der Führungsbuchse 5 anliegt und dazu dient, den Arbeitsraum 15 gasdicht abzudichten. Die Ummantelung 23 ist aus einem temperaturbeständigen Material, z.B. einem besonderen Kunststoff hergestellt, der so ausgelegt ist, daß er von der erzeugten heißen Druckgasströmung nicht zerstört werden kann. Die Ummantelung 23 schützt damit das Zugübertragungsmittel 7 vor einer thermischen Schädigung durch das heiße Druckgas.

Die Ummantelung kann ein Schrumpfschlauch, eine Seilbeschichtung (z.B. eine auf das Zugseil extrudierte Schicht) oder eine aufgepreßte Hülse sein.

Der Fortsatz 21 dient als Umlenkeinrichtung, die verhindert, daß das heiße Druckgas unmittelbar auf die Umhüllung 23 und das Zugübertragungsmittel 7 auftrifft. Die Umlenkeinrichtung lenkt die durch die Gasaustrittsöffnungen 19 hindurchtretenden einzelnen Gasströme radial nach außen, so daß das Druckgas auf das Rohr 3 und den Kolben 9 trifft, wo es schlagartig abgekühlt wird. Mit niedriger Temperatur trifft es anschließend auf die Umhüllung 23, so daß das Zugübertragungsmittel 7 thermisch wesentlich geringer belastet ist als bei herkömmlichen Gurtstraffern und schwächer dimensioniert sein kann.

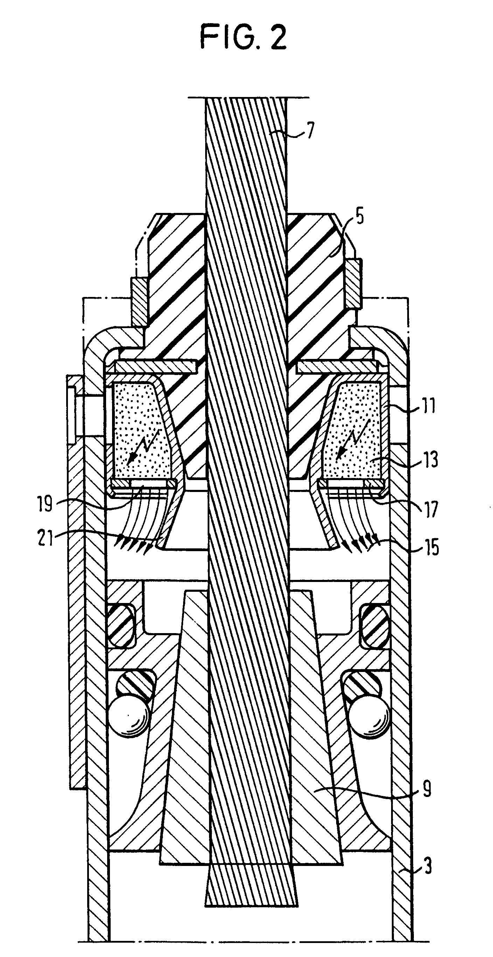

Die in Figur 2 dargestellte Ausführungsform, die den Zeitpunkt des Ausströmens des Gases wiedergibt, unterscheidet sich von der in Figur 1 dargestellten durch das Fehlen der Umhüllung 23. Ansonsten tragen einander entsprechende Teile auch die Bezugszahlen, die bereits in Figur 1 eingeführt worden sind.

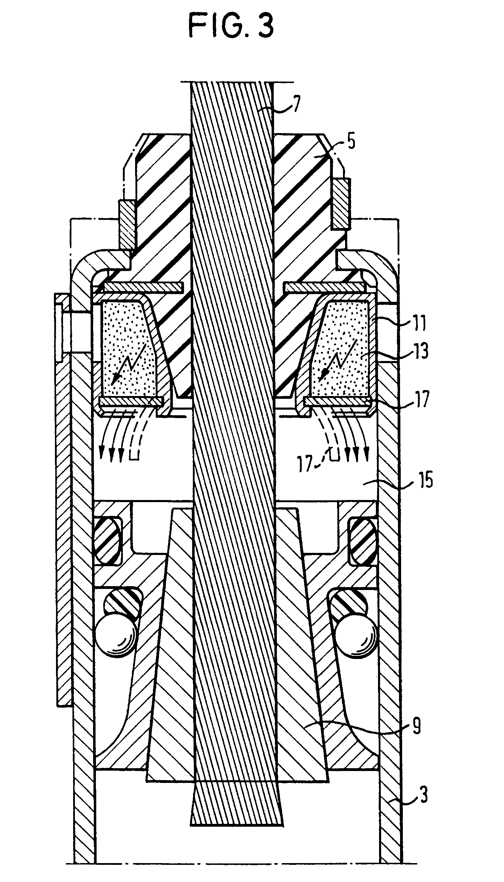

Die in Figur 3 dargestellte Ausführungsform unterscheidet sich von den zuvor beschriebenen dadurch, daß kein Fortsatz 21 vorgesehen ist. Die Stirnwand 17 ist an ihrem radial äußeren Rand so am übrigen Gasgeneratorgehäuse 11 befestigt, daß sich die Stirnwand 17 aus der Befestigung beim Zünden des Treibsatzes 13 löst und in Richtung Arbeitsraum 15 gebogen wird, wie mit unterbrochenen Linien dargestellt. An ihrem radial inneren Rand löst sich die Stirnwand 17 nicht vom übrigen Gasgeneratorgehäuse 11. Durch die so umgebogene Stirnwand 17 wird die Umlenkeinrichtung gebildet. Die Stirnwand 17 kann zusätzlich auch nicht dargestellte Sollbruchlinien, die sich z.B. in radialer Richtung erstrecken, aufweisen, um das Öffnen des Gasgeneratorgehäuses zu erleichtern. Die Stirnwand 17 und ihre Befestigung an ihrem radial inneren Rand sind so ausgelegt, daß die verformte Stirnwand 17 den Druckgasstrom in Richtung Rohrwandung lenkt und so das Zugübertragungsmittel 7 vor direktem Anströmen schützt. Anstatt die Stirnwand 17 wie in der in Fig. 3 dargestellten Ausführungsform als separates Teil auszubilden, kann sie auch einstückig mit dem übrigen Gehäuseteil 11 verbunden sein. Die Stirnwand ist vorzugsweise im radial äußeren Bereich dünner ausgebildet als im radial inneren Bereich, damit ein Öffnen von außen nach innen erfolgt. Der durch die Stirnwand 17 gebildete Abschnitt des Gasgeneratorgehäuses öffnet sich dadurch ähnlich einer Klappe.

Bei dem in Figur 4 dargestellten Gurtstraffer ist der Gasgenerator nicht im Inneren des Rohres 3 angeordnet, sondern in einer sich radial erstreckenden Kammer 27 in einem auf das Rohr 3 aufgeschraubten Gehäuseteil 29, das das Innere des Rohres 3 nach außen hin abdichtet. Der Arbeitsraum 15 hat einen sich im Inneren des Rohres 3 befindlichen Abschnitt sowie einen damit verbundenen, in das Gehäuseteil 29 ragenden Abschnitt. In der nichtbetätigten Stellung erstreckt sich das Kolbenteil 9 bis unmittelbar zu dem im Gehäuseteil 29 liegenden Abschnitt des Arbeitsraums 15. Der Gasgenerator ist in dieser Darstellung nicht gezeigt, hat aber ein patronenförmiges Gehäuse und wird in Pfeilrichtung in die Kammer 27 eingeführt. Um zu verhindern, daß das in radialer Richtung in den Arbeitsraum 15 einströmende Druckgas direkt auf das Zugübertragungsmittel 7 auftrifft, hat das Gehäuseteil 29 einen einstückig an ihn angeformten hülsenartigen, langgestreckten Vorsprung 31, der in den Arbeitsraum 15 ragt und gleichzeitig als Führung für das Zugübertragungsmittel dient. Der Arbeitsraum 15 ist im Bereich des Gehäuseteils 29 kreisringförmig ausgebildet. Zur besseren Abdichtung und Erzielung einer besseren Führungswirkung ist das Zugübertragungsmittel 7 mit einer einstückig am Kolbenteil 9 angeformten Hülse 33 umgeben, die aus temperaturbeständigem Kunststoff gefertigt ist. Im Rückhaltefall lenkt der Vorsprung 31 das Druckgas um das Zugübertragungsmittel 7 herum und in Pfeilrichtung zum Rohr 3 hin. Bei Verschiebung des Kolbenteils 9 kommt das Druckgas aufgrund der Hülse 33 nicht mit dem Zugübertragungsmittel 7 in unmittelbaren Kontakt, so daß dieses vor thermischer Belastung geschützt ist.

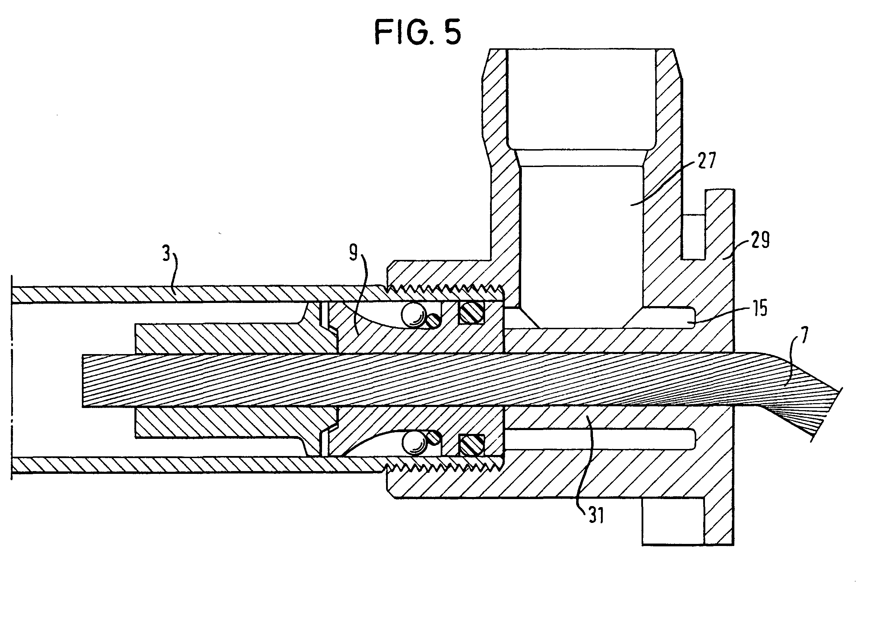

Bei dem in Figur 5 dargestellten Gurtstraffer hat das Kolbenteil 9 keine an ihm angebrachte Hülse 33. Der Vorsprung 31 schützt jedoch das Zugübertragungsmittel 7 vor unmittelbarem Kontakt mit dem Druckgas und lenkt das Druckgas parallel zum Zugübertragungsmittel 7 auf den Kolben 9.

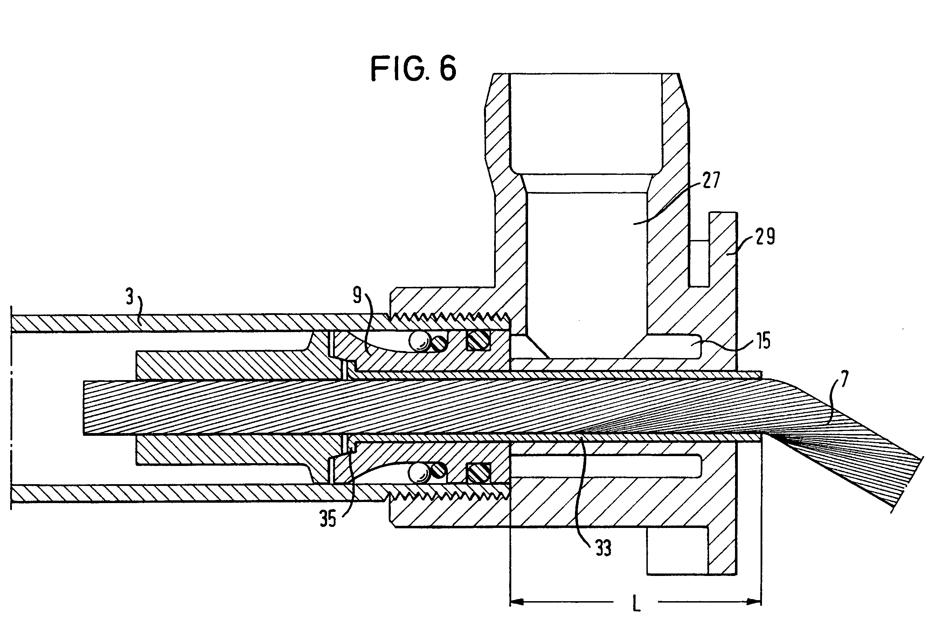

Anstatt eines einstückig mit dem Kolben 9 verbundenen Teiles ist bei dem in Figur 6 dargestellten Gurtstraffer die Hülse 33 als separates Teil ausgebildet, das auf das Zugübertragungsmittel 7 aufgepreßt ist. Die Hülse 33 erstreckt sich durch das Kolbenteil 9 hindurch und hat ein nach außen umgebogenes Ende 35, das eine Mitnahme der Hülse 33 bei Verschiebung des Kolbens 9 sicherstellt. Mit L ist die Führungslänge des Zugübertragungsmittels 7 im Gehäuseteil 29 gekennzeichnet. Da die Führungslänge L sehr groß ist, ist eine erhebliche Dichtwirkung erzielbar.

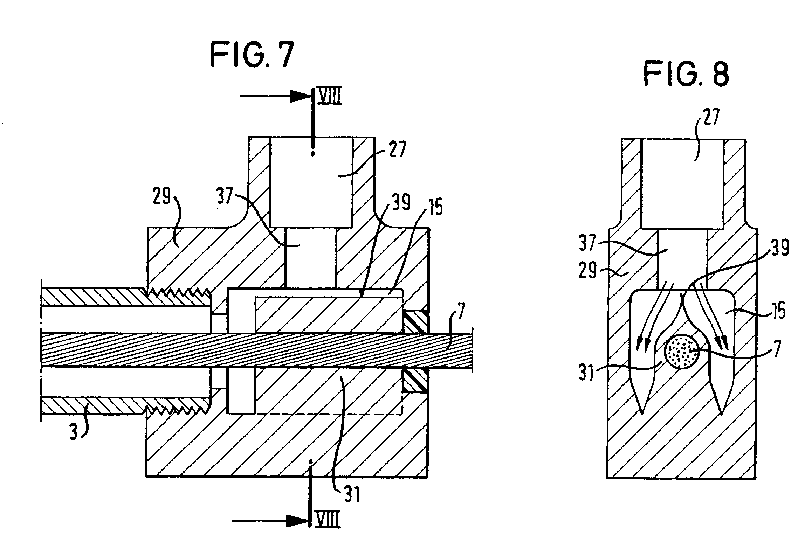

Bei dem in den Figuren 7 und 8 dargestellten Gurtstraffer ist zwischen der Kammer 27 und dem Arbeitsraum 15 ein sich in radialer Richtung erstreckender Kanal 37 vorgesehen, über den das Druckgas in den Arbeitsraum 15 einströmt. Der Vorsprung 31 erstreckt sich vom Gehäuseteil 29 im Bereich des dem Kanal 37 diametral gegenüberliegenden Bereichs beidseits um das Zugübertragungsmittel 7 herum bis zur Einmündung des Kanals 37 in den Arbeitsraum 15 und läuft zu einer Kante 39 hin zu, so daß die Gasströmung geteilt und um das Zugübertragungsmittel 7 herum geleitet wird und schließlich in das Rohr 3 strömt. Der Vorsprung 31 kann einstückig mit dem Gehäuseteil 29 verbunden oder auch als separates Teil ausgebildet sein. Er kann, je nach Ausführungsform auch als Führung für das Zugübertragungsmittel 7 dienen und eine Abdichtfunktion haben.

## Patentansprüche

1. Gurtstraffer, insbesondere Schloßstraffer für ein Fahrzeuginsassen-Rückhaltesystem, mit einem Gehäuse (3, 5) mit einer zylindrischen Gehäusewand, einem Gasgenerator, einem durch die Gehäusewand radial begrenzten Arbeitsraum (15), in den das im Rückhaltefall freigesetzte Druckgas strömt, einem durch das Druckgas verschiebbaren Kolbenteil (9) im Arbeitsraum (15), einem Gurtangriffsmittel, das mit dem angelegten Gurt in kraftübertragender Beziehung steht, und mit einem Zugübertragungsmittel (7), das das Gurtangriffsmittel mit dem Kolbenteil (9) verbindet, wobei im Arbeitsraum (15) eine gehäusefeste Umlenkeinrichtung für den Druckgasstrom vorgesehen ist, dadurch gekennzeichnet, daß die Umlenkeinrichtung im Rückhaltefall eine Wand (17) aufweist, die in Richtung zum Arbeitsraum radial schräg nach außen gerichtet ist und die den Druckgasstrom radial schräg nach außen, vom Zugübertragungsmittel (7) weg- und zur Gehäusewand lenkt und so ein direktes Anströmen des Zugübertragungsmittels (7) durch aus dem Gasgenerator ausströmendes Druckgas verhindert.

2. Gurtstraffer nach Anspruch 1, dadurch gekennzeichnet, daß das Zugübertragungsmittel (7) ein Zugseil ist.

3. Gurtstraffer nach einem der vorstehenden Ansprüche, dadurch gekennzeichnet, daß der Gasgenerator ein Gasgeneratorgehäuse (11, 17) aufweist und ein Abschnitt des Gasgeneratorgehäuses (17) die Umlenkeinrichtung bildet.

4. Gurtstraffer nach Anspruch 3, dadurch gekennzeichnet, daß das Gasgeneratorgehäuse (11) bei Aktivierung des Gurtstraffers geöffnet wird, das Gasgeneratorgehäuse (11) im Bereich des die Umlenkeinrichtung bildenden Abschnittes aufgebogen wird und sich der Abschnitt um das Zugübertragungsmittel (7) legt.

5. Gurtstraffer nach Anspruch 3 oder 4, dadurch gekennzeichnet, daß das Gasgeneratorgehäuse (11) kreisringförmig und im Inneren des Gehäuses angeordnet ist und der Abschnitt durch die an den Arbeitsraum (15) angrenzende Stirnwand (17) gebildet ist.

6. Gurtstraffer nach Anspruch 5, dadurch gekennzeichnet, daß die Stirnwand Sollbruchlinien aufweist, die klappenartig bei Aktivierung des Gurtstraffers öffnende Abschnitte definieren.

7. Gurtstraffer nach Anspruch 5 oder 6, dadurch gekennzeichnet, daß die Stirnwand (17) als separates Teil ausgebildet ist.

8. Gurtstraffer nach einem der vorstehenden Ansprüche, dadurch gekennzeichnet, daß die Umlenkeinrichtung einen vom Gasgeneratorgehäuse (11) abstehenden, in den Arbeitsraum (15) ragenden, sich trichterförmig erweiternden Fortsatz (21) aufweist.

9. Gurtstraffer nach einem der Ansprüche 1 oder 2, dadurch gekennzeichnet, daß die Umlenkeinrichtung durch wenigstens einen Vorsprung (31) des Gehäuses des Gurtstraffers gebildet ist, der das Zugübertragungsmittel (7) umgibt und in den Arbeitsraum (15) ragt.

10. Gurtstraffer nach Anspruch 9, dadurch gekennzeichnet, daß das Gehäuse seitlich vom Arbeitsraum (15) eine mit dem Arbeitsraum (15) in Strömungsverbindung stehende Kammer (27) aufweist, in der der Gasgenerator angeordnet ist.

11. Gurtstraffer nach einem der vorstehenden Ansprüche, dadurch gekennzeichnet, daß das Zugübertragungsmittel (7) ein Zugseil ist, welches eine in die Führung hineinragende und an ihr anliegende Ummantelung (23) aufweist.

12. Gurtstraffer nach Anspruch 11, dadurch gekennzeichnet, daß die Ummantelung (23) aus einem durch den heißen Druckgasstrom nicht zerstörbaren Material ist und
als Schrumpfschlauch,
als Zugseilbeschichtung oder
als Hülse (33)
ausgebildet ist.

13. Gurtstraffer nach Anspruch 12, dadurch gekennzeichnet, daß die Hülse (33) mit dem Kolbenteil (9) verbunden ist.

14. Gurtstraffer nach Anspruch 12 oder 13, dadurch gekennzeichnet, daß die Ummantelung (23) aus Kunststoff ist.

## Claims

1. A belt tensioner, more particularly a buckle tensioner for a vehicle occupant restraint system, comprising a housing (3, 5) having a cylindrical housing wall, a gas generator, a working space (15) radially defined by the housing wall and into which the pressurized gas released in a restraint situation flows, a piston part (9) which is displaceable in the working space (15) by the pressurized gas, a belt engagement means in force-transmitting relationship with the buckled belt, and a traction transfer means (7) which connects the belt engagement means with the piston part (9), a housing-fixed deflection means for the stream of pressurized gas being provided in the working space (15), characterized in that in a restraint situation the deflection means includes a wall (17) which is orientated radially obliquely outwards towards the working space and which guides the stream of pressurized gas radially obliquely outwards away from the traction transfer means (7) and towards the housing wall and thus prevents the pressurized gas which flows out of the gas generator from directly impinging on the traction transfer means (7).

2. The belt tensioner as set forth in claim 1, characterized in that the traction transfer means (7) is a traction cable.

3. The belt tensioner as set forth in either of the preceding claims, characterized in that the gas generator comprises a gas generator housing (11, 17) and the deflection means is formed by a section of the gas generator housing (17).

4. The belt tensioner as set forth in claim 3, characterized in that the gas generator housing (11) is opened on activation of the belt tensioner, and that the gas generator housing (11) is bent open in the region of the section forming the deflection means and the section surrounds the traction transfer means (7).

5. The belt tensioner as set forth in claim 3 or 4, characterized in that the gas generator housing (11) is annular and is disposed in the interior of the housing, and that the section is formed by the end wall (17) adjacent to the working space (15).

6. The belt tensioner as set forth in claim 5, characterized in that the end wall is provided with predetermined breaking lines defining sections which open like flaps on activation of the belt tensioner.

7. The belt tensioner as set forth in claim 5 or 6, characterized in that the end wall (17) is designed as a separate part.

8. The belt tensioner as set forth in any of the preceding claims, characterized in that the deflection means has a flaring extension (21) projecting from the gas generator housing (11) and protruding into the working space (15).

9. The belt tensioner as set forth in either of claims 1 or 2, characterized in that the deflection means is formed by at least one protrusion (31) on the housing of the belt tensioner, the protrusion (31) surrounding the traction transfer means (7) and projecting into the working space (15).

10. The belt tensioner as set forth in claim 9, characterized in that the housing comprises a chamber (27) provided laterally of the working space (15) and in fluid communication with the working space (15), the gas generator being disposed in the chamber (27).

11. The belt tensioner as set forth in any of the preceding claims, characterized in that the traction transfer means (7) is a traction cable having a sheathing (23) which projects into the guide and rests against it.

12. The belt tensioner as set forth in claim 11, characterized in that the sheathing (23) is made of a material which can not be destroyed by the stream of hot pressurized gas and is designed
as a shrinkable tube,
as a traction cable coating or
as a sleeve (33).

13. The belt tensioner as set forth in claim 12, characterized in that the sleeve (33) is connected with the piston part (9).

14. The belt tensioner as set forth in claim 12 or 13, characterized in that the sheathing (23) is made of plastics.

## Revendications

1. Tendeur de ceinture, en particulier tendeur de serrure pour un système de retenue d'occupants d'un véhicule, comportant un boîtier (3, 5) avec une paroi de boîtier cylindrique, un générateur de gaz, un espace de travail (15) défini radialement par la paroi de boîtier, dans lequel s'écoule le gaz sous pression libéré en cas de retenue, une partie de piston (9) déplaçable par le gaz sous pression dans l'espace de travail (15), un moyen d'engagement de ceinture qui est en liaison de transmission de force avec la ceinture attachée, et un moyen de transmission de traction (7) qui relie le moyen d'engagement de ceinture à la partie de piston (9), un dispositif de déflection solidaire du boîtier étant prévu dans l'espace de travail (15) pour le flux de gaz sous pression, caractérisé en ce que le dispositif de déflection présente, en cas de retenue, une paroi (17) qui est orientée radialement en oblique vers l'extérieur en direction de l'espace de travail et qui dévie le flux de gaz sous pression radialement en oblique vers l'extérieur, en éloignement du moyen de transmission de traction (7) et vers la paroi du boîtier, et empêche ainsi que le gaz sous pression s'écoulant hors du générateur de gaz ne souffle directement sur le moyen de transmission de traction (7).

2. Tendeur de ceinture selon la revendication 1, caractérisé en ce que le moyen de transmission de traction (7) est un câble de traction.

3. Tendeur de ceinture selon l'une quelconque des revendications précédentes, caractérisé en ce que le générateur de gaz présente un boîtier (11, 17) de générateur de gaz et en ce qu'un tronçon du boîtier (17) de générateur de gaz forme le dispositif de déflection.

4. Tendeur de ceinture selon la revendication 3, caractérisé en ce que le boîtier (11) de générateur de gaz est ouvert lorsque le tendeur de ceinture est activé, le boîtier (11) de générateur de gaz est déplié dans la zone du tronçon formant le dispositif de déflection et le tronçon se pose autour du moyen de transmission de traction (7).

5. Tendeur de ceinture selon la revendication 3 ou 4, caractérisé en ce que le boîtier (11) de générateur de gaz est de forme annulaire et agencé à l'intérieur du boîtier et en ce que le tronçon est formée par la paroi frontale (17) adjacente à l'espace de travail (15).

6. Tendeur de ceinture selon la revendication 5, caractérisé en ce que la paroi frontale présente des lignes destinées à la rupture qui définissent des tronçons s'ouvrant à la manière de volets lorsque le tendeur de ceinture est activé.

7. Tendeur de ceinture selon la revendication 5 ou 6, caractérisé en ce que la paroi frontale (17) est réalisée sous forme de pièce séparée.

8. Tendeur de ceinture selon l'une quelconque des revendications précédentes, caractérisé en ce que le dispositif de déflection présente un prolongement (21) qui fait saillie hors du boîtier (11) de générateur de gaz et qui s'évase en forme d'entonnoir.

9. Tendeur de ceinture selon l'une ou l'autre des revendications 1 ou 2, caractérisé en ce que le dispositif de déflection est formé par au moins une saillie (31) du boîtier du tendeur de ceinture, laquelle entoure le moyen de transmission de traction (7) et se projette dans l'espace de travail (15).

10. Tendeur de ceinture selon la revendication 9, caractérisé en ce que le boîtier présente latéralement à l'espace de travail (15) une chambre (27) reliée par écoulement avec l'espace de travail (15).

11. Tendeur de ceinture selon l'une quelconque des revendications précédentes, caractérisé en ce que le moyen de transmission de traction (7) est un câble de traction qui présente un enrobage (23) qui fait saillie dans le guide et qui repose sur celui-ci.

12. Tendeur de ceinture selon la revendication 11, caractérisé en ce que l'enrobage (23) est un matériau non destructible par le flux de gaz sous pression chaud et est réalisé
sous forme de gaine thermorétractable,
sous forme de revêtement de câble de traction ou
sous forme de manchon (33).

13. Tendeur de ceinture selon la revendication 12, caractérisé en ce que le manchon (33) est relié à la partie de piston (9).

14. Tendeur de ceinture selon la revendication 12 ou 13, caractérisé en ce que l'enrobage (23) est en matière plastique.
